# EUROPEAN PATENT APPLICATION

(11) **EP 2 186 663 A2**
(43) Date of publication of application: **19.05.2010**
(21) Application number: 09174195.9
(22) Date of filing: 27.10.2009
(51) Int. Cl.: B60G 21/055, B60G 17/0165

(54) **Roll rigidity controlling apparatus**

(30) Priority: 28.10.2008 JP 2008277094
(71) Applicant: Aisin Seiki Kabushiki Kaisha, Kariya-shi, Aichi 448-8650 (JP); Aisin AW Co., Ltd., Anjyo-shi Aichi 444-1192 (JP)
(72) Inventor: Hidaka, Seiji, Kariya-shi, Aichi 448-8650 (JP); Miyajima, Takayuki, Okazaki-shi, Aichi 444-8564 (JP)
(74) Representative: TBK-Patent

(57) **Abstract**

A roll rigidity controlling apparatus includes a positional information obtaining means (21) for obtaining a positional information of a vehicle (1), a gradient information obtaining means (22) for obtaining a gradient information relating to a gradient of a road existing ahead of the vehicle (1), and a roll rigidity distribution changing means (25) for changing a roll rigidity distribution ratio between a front portion and a rear portion of the vehicle (1) on the basis of the positional information obtained by the positional information obtaining means (21) and the gradient information obtained by the gradient information obtaining means (22) before the vehicle (1) reaches a point at which the gradient of the road changes.

## Description

### TECHNICAL FIELD

This disclosure generally relates to a roll rigidity controlling apparatus.

### BACKGROUND

A roll rigidity controlling apparatus disclosed in JP2008-137446A includes a roll rigidity varying means at a front-wheel position or a rear-wheel position. Furthermore, the roll rigidity controlling apparatus disclosed In JP2008-137446A obtains a lateral acceleration of a vehicle at a center of gravity of the vehicle and a yaw rate generated around the center of gravity of the vehicle. Then, the roll rigidity controlling apparatus obtains the lateral acceleration generated at the front wheel or the rear wheel on the basis of the obtained lateral acceleration and the yaw rate in order to calculate a target anti-roll moment. Accordingly, the roll rigidity controlling apparatus disclosed in JP2008-137446A controls the roll rigidity varying means at the front-wheel position or the rear-wheel position on the basis of the target anti-roll moment.

More specifically, the roll rigidity controlling apparatus disclosed in JP2008-137446A controls an actuator of an active stabilizer on the basis of a detection result of a lateral acceleration sensor in order to increase or decrease an anti-roll moment, thereby changing a roll rigidity of the vehicle at the front-wheel position or the rear-wheel position.

A vehicle behavior controlling apparatus disclosed in JP2006-89005A includes a front-wheel roll rigidity adjusting means, a rear-wheel roll rigidity adjusting means and a roll rigidity controlling means, which controls the front-wheel roll rigidity adjusting means and the rear-wheel roll rigidity adjusting means. Furthermore, the vehicle behavior controlling apparatus disclosed in JP2006-89005A includes a spin quantity calculating means for calculating a degree of an oversteer tendency of the vehicle and a drift quantity calculating means for calculating a degree of an understeer tendency of the vehicle.

The roll rigidity controlling means controls a roll rigidity of front-wheels to be increased or a roll rigidity of rear-wheels to be decreased in a case where a spin quantity (a spin property) is equal to or greater than a spin-inclined roll rigidity threshold value, in order to generate an oversteer characteristic at the vehicle. On the other hand, in a case where a drift quantity is equal to or greater than a drift-inclined roll rigidity threshold value, the roll rigidity controlling means controls the roll rigidity of the rear-wheels to be increased or the roll rigidity of the front-wheels to be decreased in order to generate an understeer characteristic at the vehicle. Accordingly, the vehicle is adjusted in a neutral direction.

More specifically, the vehicle behavior controlling apparatus disclosed in JP2006-89005A includes a lateral acceleration sensor, a vehicle speed sensor, a steering angle sensor and a yaw rate sensor. An active stabilizer electronic control unit (an active stabilizer ECU) of the vehicle behavior controlling apparatus inputs therein a signal relating to a lateral acceleration from the lateral acceleration sensor and controls each roll rigidity varying actuator on the basis of a degree and direction of the lateral acceleration.

Each of the roll rigidity controlling apparatus disclosed in JP2008-137446A and the vehicle behavior controlling apparatus disclosed in JP2006-89005A is configured so that the roll rigidity of the front-wheels and the roll rigidity of the rear-wheels are controlled independently of each other. Furthermore, each of the roll rigidity controlling apparatus disclosed in JP2008-137446A and the vehicle behavior controlling apparatus disclosed in JP2006-89005 includes a control system for adjusting a roll rigidity distribution between the front-wheels and the rear-wheels in order to adjust a vehicle behavior in a case where the vehicle behavior is disrupted.

According to the roll rigidity controlling apparatus disclosed in JP2008-137446A and the vehicle behavior controlling apparatus disclosed in JP2006-89005A, the vehicle includes the lateral acceleration sensor in order to obtain the vehicle behavior. Accordingly, each of the roll rigidity controlling apparatus disclosed in JP2008-137446A and the vehicle behavior controlling apparatus disclosed in JP2006-89005 executes a control of changing the roll rigidity distribution between the front-wheels and the rear-wheels on the basis of the detection result of the lateral acceleration sensor. However, because each of the roll rigidity controlling apparatus disclosed in JP2008-137446A and the vehicle behavior controlling apparatus disclosed in JP2006-89005A executes the control on the basis of the detection result of the lateral acceleration sensor, after the lateral acceleration acts on the vehicle and then the lateral acceleration sensor detects the generated lateral acceleration, a delay is likely to occur on the execution of the control.

Accordingly, because the control is started after the vehicle is displaced in a lateral direction, a movement of the vehicle around an axle of the vehicle extending in a front-rear direction may not be appropriately controlled, which may result in deteriorating riding comfort. Furthermore, the vehicle may not be properly driven straight as intended.

Specifically, in a case where the vehicle travels on a road having a increasing gradient, the vehicle is more likely to be inclined to the understeer tendency. On the other hand, in a case where the vehicle travels on a road having an decreasing gradient, the vehicle is more likely to be inclined to the oversteer tendency. Hence, in a case where a driver performs a steering operation on the road having the gradient, a posture of the vehicle is changed in a direction different from a direction to which the driver intends to drive the vehicle.

However, according to the roll rigidity controlling apparatus disclosed in JP2008-137446A and the vehicle behavior controlling apparatus disclosed in JP2006-89005, the control is started after the driver performs the steering operation while the vehicle is moving and the acceleration acts on the vehicle in the lateral direction even in the case where the vehicle travels on the road on which the understeer or the oversteer is likely to be induced.

A need thus exists to provide a roll rigidity controlling apparatus which executes a changing of a roll rigidity distribution between a front-wheel and a rear-wheel at an appropriate timing.

### SUMMARY

According to an aspect of this disclosure, a roll rigidity controlling apparatus includes a positional information obtaining means for obtaining a positional information of a vehicle, a gradient information obtaining means for obtaining a gradient information relating to a gradient of a road existing ahead of the vehicle, and a roll rigidity distribution changing means for changing a roll rigidity distribution ratio between a front portion and a rear portion of the vehicle on the basis of the positional information obtained by the positional information obtaining means and the gradient information obtained by the gradient information obtaining means before the vehicle reaches a point at which the gradient of the road changes.

Accordingly, the roll rigidity distribution changing means adjusts the roll rigidity of the front portion of the vehicle and the roll rigidity of the rear portion of the vehicle at the timing when the vehicle reaches a gradient of a road or before the vehicle reaches the gradient of the road. As a result, a roll rigidity suitable for the gradient may be achievable. When comparing to a known roll rigidity controlling apparatus that executes a control after changes in a posture of a vehicle is detected by means of a sensor and the like, the roll rigidity controlling apparatus according to this disclosure preliminarily avoids an understeer tendency or an oversteer tendency, which is likely to occur at the vehicle, without causing a delay in executing the control, because a roll rigidity distribution between the front portion and the rear portion of the vehicle is changed when the vehicle reaches a starting point of the gradient, at which a posture of the vehicle is likely to be changed, while the vehicle travels. Accordingly, the roll rigidity controlling apparatus according to this disclosure changes a distribution of the roll rigidity between the front portion and the rear portion of the vehicle at an appropriate timing, thereby appropriately avoiding disruption of the posture of the vehicle in a yawing direction.

According to another aspect of this disclosure, the roll rigidity controlling apparatus further includes a front roll-rigidity adjusting means for adjusting a roll rigidity of a front wheel and a rear-roll rigidity adjusting means for adjusting a roll rigidity of a rear wheel. The roll rigidity distribution changing means changes at least one of the roll rigidity of the front roll-rigidity changing means and the roll rigidity of the rear-roll rigidity changing means.

Accordingly, the roll rigidity of the front portion of the vehicle and the roll rigidity of the rear portion of the vehicle may be appropriately set so as to correspond to the gradient.

According to a further aspect of this disclosure, each of the front roll-rigidity adjusting means and the rear-roll rigidity adjusting means includes a stabilizer unit having a torsion bar, which adjusts a torsional rigidity by means of a rigidity adjusting mechanism, and two arms, which are integrally provided at both end portions of the torsion bar, respectively, the stabilizer unit is supported by the vehicle so that the torsion bar extends in a lateral direction of the vehicle, and the two arms support a right wheel and a left wheel, respectively.

Accordingly, the rigidity adjusting mechanism of each of the stabilizer units adjusts the torsional rigidity, thereby achieving an adjustment of the rigidities of the front portion and the rear portion of the vehicle.

According to a further aspect of this disclosure, the roll rigidity controlling apparatus includes a traveling speed obtaining means for obtaining a traveling speed information of the vehicle. The roll rigidity distribution changing means corrects an adjustment amount of the rigidity on the basis of the traveling speed information, which is obtained by the traveling speed obtaining means.

Accordingly, for example, the roll rigidity controlling apparatus of this disclosure adjusts the roll rigidity in a manner where, the greater a vehicle speed is, the greater value the roll rigidity is set to be. As a result, a disruption of the posture of the vehicle may be further appropriately avoided.

According to a further aspect of this disclosure, the positional information obtaining means includes a GPS-type navigation unit for obtaining the positional information on the basis of received signals, which are outputted from plural satellites, and the gradient information obtaining means obtains the gradient information of the road set on a map information on the basis of the positional information.

Accordingly, the control may be executed on the basis of the information obtained from the navigation unit using a global positioning system, which is provided at the vehicle.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a diagram schematically illustrating a configuration of a vehicle;

Fig. 2 is a block diagram illustrating a flow of an information;

Fig. 3 is a block diagram illustrating a configuration of a distribution determining unit;

Fig. 4 is a block diagram illustrating a configuration of a distribution adjustment value setting unit;

Fig. 5 is a diagram illustrating a map for obtaining an adjustment value on the basis of a gradient information and a vehicle speed; and

Fig. 6 is a flowchart illustrating a roll rigidity control.

### DETAILED DESCRIPTION

An embodiment of a roll rigidity controlling apparatus will be described below with reference to the attached drawings.

[Configuration of vehicle]

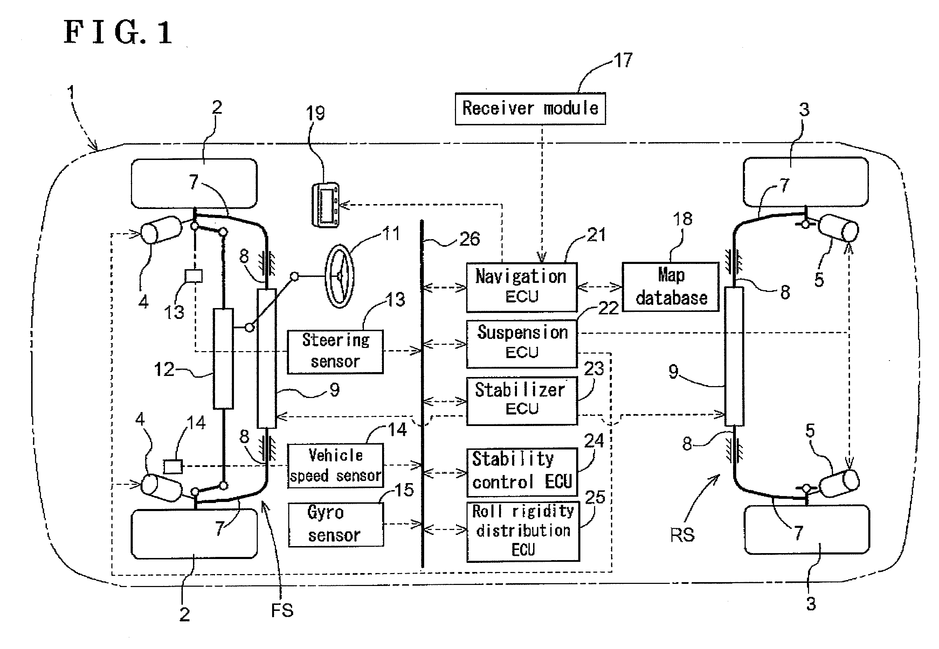

As illustrated in Fig. 1, a vehicle 1 (a passenger car) includes front-wheels at a front-right portion and a front-left portion of the vehicle 1 so as to be freely steered, and rear-wheels at a rear-right portion and a rear-left portion of the vehicle 1. Furthermore, the vehicle 1 includes a running-drive system for changing a speed of a driving force generated by an engine and transmitting the changed driving force to the front-wheels 2 or the rear-wheels 3, alternatively to both of the front-wheels 2 and the rear-wheels 3.

The front-right and front-left wheels 2 and the rear-right and rear-left wheels 3 are supported at a vehicle body frame by means of a suspension unit. An independent suspension-type is adapted as the suspension unit. The suspension unit includes, for example, a double wishbone-type axle supporting system having an upper arm and a lower arm. A front damping-force adjusting mechanism 4 (a front roll-rigidity adjusting means), which includes a shock absorber, is provided at each of the front-right and front-left wheels 2. Similarly, a rear damping-force adjusting mechanism 5 (a rear-roll rigidity adjusting means), which includes a shock absorber, is provided at each of the rear-right and rear-left wheels 3.

Furthermore, the vehicle 1 includes a front-stabilizer unit FS (the front roll-rigidity adjusting means) for elastically supporting the front-right and front-left wheels 2 and a rear-stabilizer unit RS (the rear-roll rigidity adjusting means) for elastically supporting the rear-right and rear-left wheels 3. The front-stabilizer unit FS and the rear-stabilizer unit RS serve as the suspension unit. Furthermore, each of the front-stabilizer unit FS and the rear-stabilizer unit RS is configured as an active type, so that a rigidity acting on each of a front-suspension unit and a rear-suspension unit of the vehicle 1 is adjustable. Accordingly, because the rigidity acting on each of the front-suspension unit and the rear-suspension unit is adjusted, a necessary anti-roll moment is to be generated and to act on the vehicle 1.

In the vehicle 1, the front damping-force adjusting mechanisms 4 and the front-stabilizer unit FS configure a front rigidity adjusting means. Furthermore, the rear damping-force adjusting mechanisms 5 and the rear-stabilizer unit RS configure a rear rigidity adjusting means.

Alternatively, the suspension unit may be modified so as to include a coil spring or an air spring so as to correspond to each of the front-right and front-left wheels 2 and each of the rear-right and rear-left wheels 3.

The shock absorber, which is included in each of the front damping-force adjusting mechanisms 4 and each of the rear damping-force adjusting mechanisms 5, has a configuration in which a cylinder, into which a piston is inserted, is filled with oil. Furthermore, the shock absorber includes a variable orifice for generating a resistance force against a flow of the oil when the piston is actuated in an elongated direction (i.e. a direction to which the piston is moved) or compressing direction.

The variable orifice is configured so that an opening degree thereof is changeable in response to an electric control signal. Accordingly, the resistance force acting on the oil, which flows between a bottom portion of the cylinder and a piston rod side of the cylinder, is changeable while the piston is actuated in response to the opening degree of the variable orifice, which may be set at any desired degree, thereby adjusting a damping force.

Each of the front-stabilizer unit FS and the rear-stabilizer unit RS includes-arms 7, torsion bars 8 and a rigidity adjusting mechanism 9. The arms 7 are provided at a right end portion and a left end portion of the front-stabilizer unit FS (the rear-stabilizer unit RS) in order to support the wheels 2 (the wheels 3), respectively. The torsion bars 8 are connected to the respective arms 7. The rigidity adjusting mechanism 9, which is configured so as to change a torsional rigidity, is arranged at an intermediate portion of the front-stabilizer unit FS (the rear-stabilizer unit RS) and connected to the respective torsion bars 8.

The rigidity adjusting mechanism 9 includes plural cylinder-shaped portions, each of which is made of a spring material. The plural cylinder-shaped portions are fitted onto the respective torsion bars 8 along an elongated direction thereof. More specifically, an end portion of each of the plural cylinder-shaped portions Is fixed on each of the torsion bars 8 in a spline-fitting manner or by welding so that a torque is freely transmitted between the cylinder-shaped portions and the torsion bars 8. Furthermore, the rigidity adjusting mechanism 9 includes jaw clutch between the other end portion of each of the plural cylinder-shaped portions and each of the torsion bars 8, so that a torque transmission therebetween is established and interrupted (see e.g. JP2007-30574A).

Accordingly, in a case where one or more of the jaw clutch is turned to be in an engaged state in order to establish the torque transmission between the rigidity adjusting mechanism 9 and the torsion bar(s) 8, a rigidity of the cylinder-shaper portion(s) acts on the torsion bar(s) 8. On the other hand, in a case where the one or more of the jaw clutch is turned to be in a disengaged state in order to interrupt the torque transmission between the rigidity adjusting mechanism 9 and the torsion bar(s) 8, the rigidity of the cylinder-shaper portion(s) does not act on the torsion bar(s) 8. Accordingly, torsional rigidity of the torsion bar(s) 8 is changed.

Alternatively, the rigidity adjusting mechanism 9 may be modified so as to include plural cylinder-shaped portions having different inner diameters. The plural cylinder-shaped portions are fitted onto the respective torsion bars 8 along the elongated direction thereof so as to be concentric with an axis of the respective torsion bars 8. In this case, an end portion of each of the plural cylinder-shaped portions is fixed on each of the torsion bars 8. Furthermore, the jaw clutch is provided at the other end portion of each of the plural cylinder-shaped portions.

According to the above-described configuration of the suspension unit, in a case where a damping force generated by the front damping-force adjusting mechanism 4, which is provided at each of the front-right and front-left wheels 2, is increased and a rigidity of the front stabilizer unit FS is increased, a roll rigidity of the suspension unit, which is provided at the front portion of the vehicle 1, is increased. On the other hand, in a case where a damping force generated by the rear damping-force adjusting mechanism 5, which is provided at each of the rear-right and rear-left wheels 3, is increased and a rigidity of the rear-stabilizer unit RS is increased a roll rigidity of the suspension unit, which Is provided at the rear portion of the vehicle 1, is increased.

The vehicle 1 of the embodiment has a configuration of controlling a behavior of the vehicle 1 to be appropriate by setting a distribution of the roll rigidity between the front portion and the rear portion of the vehicle 1. The detailed description of the control will be given later.

The vehicle 1 includes a steering wheel 11, a power steering unit 12 and a steering sensor 13. The power steering unit 12 transmits a rotational operating force generated at the steering wheel 11 to the front-right and front-left wheels 2 as a steering operation force. The steering sensor 13 is provided at, for example, one of the front wheels 2 in order to detect a steering angle thereof.

As illustrated in Fig. 1, the vehicle 1 includes a vehicle speed sensor 14 (an example of a traveling speed obtaining means) and a gyro sensor 15. The vehicle speed sensor 14 detects a traveling speed information of the front-wheels 2 or the rear-wheels 3 per unit of time on the basis of a rotating amount (i.e. a number of rotations) of the front-wheels 2 or the rear-wheels 3. The gyro sensor 15 detects a posture of the vehicle 1 in a yawing direction.

<control system>

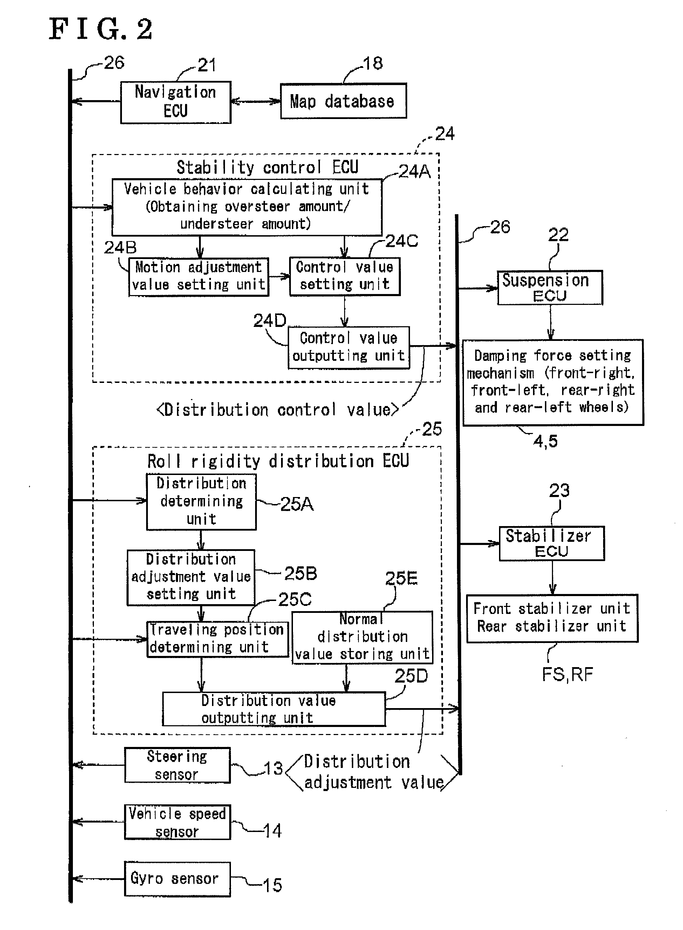

As illustrated in Figs. 1 and 2, the vehicle 1 includes a navigation electronic control unit 21 (which will be hereinafter referred to as a navigation ECU 21) (an example of a positional information obtaining means), a suspension electronic control unit 22 (which will be hereinafter referred to as a suspension ECU 22), a stabilizer electronic control unit 23 (which will be hereinafter referred to as a stabilizer ECU 23), a stability control electronic control unit 24 (which will be hereinafter referred to as a stability control ECU 24) and a roll rigidity distribution electronic control unit 25 (which will be hereinafter referred to as a roll rigidity distribution ECU 25) (an example of a roll rigidity distribution changing means, a gradient information obtaining means). The navigation ECU 21 configures a GPS-type navigation unit, which realizes navigation by means of signals outputted from plural GPS satellites and received by the GPS-type navigation. The suspension ECU 22 controls the damping force adjusting mechanism (i.e. the front damping-force adjusting mechanisms 4 and the rear damping-force adjusting mechanisms 5). The stabilizer ECU 23 controls the stabilizer unit (i.e. the front-stabilizer unit FS and the rear-stabilizer unit RS). The stability control ECU 24 controls the vehicle 1 to ensure a stability in the behavior of the vehicle 1. The roll rigidity distribution ECU 25 executes a distribution of the roll rigidity between the suspension unit of the front-wheels 2 and the suspension unit of the rear-wheels 3. Furthermore, the navigation ECU 21, the suspension ECU 22, the stabilizer ECU 23, the stability control ECU 24 and the roll rigidity distribution ECU 25 are connected to one another via a communication line 26, which is configured with a CAN bus, so that information stored within each ECU is accessible between one another.

Detection signals from the steering sensor 13, the vehicle speed sensor 14 and the gyro sensor 15 are transmitted to the communication line 26, so that the detection signals are accessible to each of the navigation ECU 21, the suspension ECU 22, the stabilizer ECU 23, the stability control ECU 24 and the roll rigidity distribution ECU 25 via the communication line 26. The communication line 26 may serve as a network similar to a local area network (LAN). Furthermore, each ECU accesses information while following a predetermined protocol. The information to be accessed is formed as a data frames following a predetermined format.

The navigation ECU 21 receives information, which is outputted from a receiver module 17, which receives the signals transmitted from plural satellites in order to obtain a positional information including a latitude information and a longitude information. Then, the navigation ECU 21 overlaps the obtained positional information on an image of a map information, which is obtained from a map database 18 and displays the overlapped positional information and the image on a monitor 19.

The navigation ECU 21 has similar functions as a general GPS navigation device. More specifically, the navigation ECU 21 searches and selects an optimal route from a present position of the vehicle 1 to a targeted position (destination) on the basis of an information relating to the current position of the vehicle 1 and a positional information relating to the targeted position when a user inputs the positional information relating to the targeted position. Furthermore, the navigation ECU 21 has a function of outputting a direction to follow on the monitor 19 at each intersection or navigating the direction to follow by voice.

Specifically, the map database 18 stores therein a gradient information indicating a gradient of each of plural points on a road information and a curvature radius information at each curve on the road in addition to the road information for specifying a position of the road.

The suspension ECU 22 controls the damping force generated at the front damping-force adjusting mechanism 4, which is provided at each of the front-right and front-left wheels 2, and the damping force generated at the rear damping-force adjusting mechanism 5, which is provided at each of the rear-right and rear-left wheels 5, independently of each other, on the basis of the obtained information.

The stabilizer EUC 23 controls the rigidity of the front-stabilizer unit FS and the rigidity of the rear-stabilizer unit RS independently of each other, on the basis of the obtained information.

The stabilizer control ECU 24 executes a roll rigidity distribution. More specifically, the stabilizer control ECU 24 executes the roll rigidity distribution in a manner where the stabilizer control ECU 24 basically controls at least one of the suspension ECU 22 and the stabilizer ECU 23 on the basis of the detection information obtained from the steering sensor 13, the vehicle speed sensor 14 and the gyro sensor 15, in a case where the vehicle travels on a flat road (a road having no gradient).

As illustrated in Fig. 2, the stability control ECU 24 includes a vehicle behavior calculating unit 24A for obtaining an oversteer amount or an understeer amount of the vehicle 1 as the behavior thereof, a motion adjustment value setting unit 24B, a control value setting unit 24C for setting a value (degree) of the roll rigidity distribution, and a control value outputting unit 24D for outputting a distribution control value.

The roll rigidity distribution ECU 25 executes the roll rigidity distribution. More specifically, the roll rigidity distribution ECU 25 executes the roll rigidity distribution in a manner where the roll rigidity distribution ECU 25 controls at least one of the suspension ECU 22 and the stabilizer ECU 23 at a timing when the vehicle 1 is about to reach a gradient starting point (i.e. a point at which a road gradient changes) or at a timing when the vehicle 1 reaches the gradient starting point, in a case where the vehicle 1 travels on the road having a gradient.

The roll rigidity distribution ECU 25 includes a distribution determining unit 25A for determining whether or not a roll rigidity distribution control is executable, a distribution adjustment value setting unit 25B for setting the value (the degree) of the roll rigidity distribution, a traveling position determining unit 25C, a distribution value outputting unit 25D and a normal distribution value storing unit 25E.

<Control process>

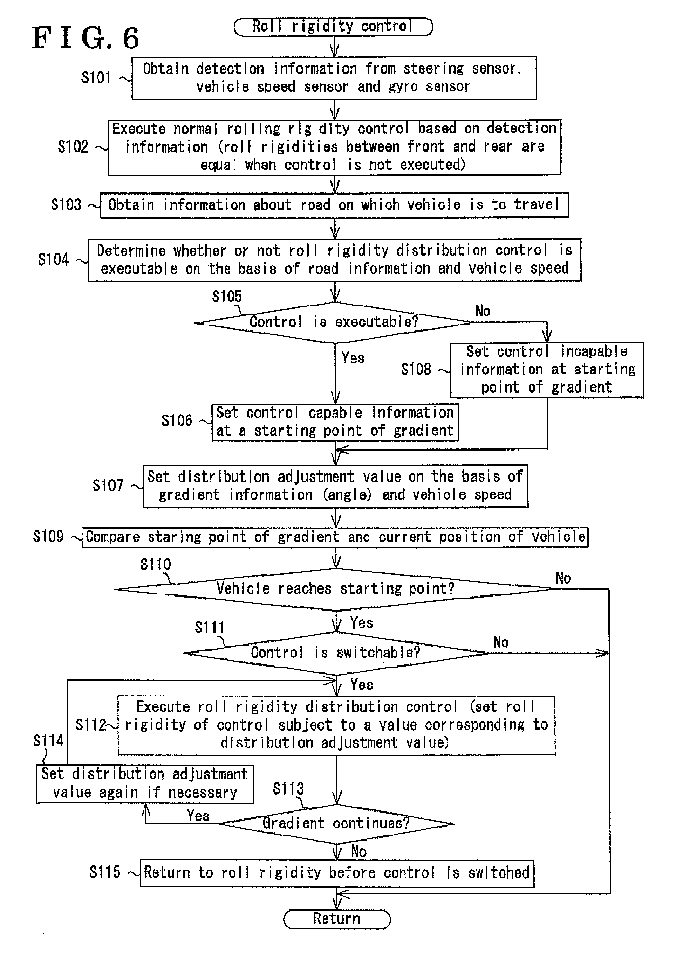

Illustrated in Fig. 6 is a flowchart of the roll rigidity control executed at the vehicle 1. The roll rigidity control will be described in detail below with reference to the flowchart illustrated in Fig. 6 and a control configuration illustrated in Figs. 2 to 4.

In the roll rigidity control, firstly, the detection information obtained from each of the steering sensor 13, the vehicle speed sensor 14 and the gyro sensor 15 is obtained at step S101. Then, a normal rolling rigidity control is executed on the basis of the detection information at step S102.

In the normal rolling rigidity control, the oversteer amount or the understeer amount is obtained at the vehicle behavior calculating unit 24A of the stability control ECU 24. More specifically, the vehicle behavior calculating unit 24A of the stability control ECU 24 compares the actual yaw rate, which is obtained on the basis of the detection information from the gyro sensor 15, and the yaw rate estimated on the basis of the detection results of the steering sensor 13 and the vehicle speed sensor 14. Then, the vehicle behavior calculating unit 24A obtains the oversteer amount or the understeer amount on the basis of the comparison result.

In a case where the motion adjustment value setting unit 24B determines that the vehicle 1 is inclined to the oversteer characteristic, which exceeds a set value, the roll rigidity of the front-wheels 2 is increased and a control value for decreasing the roll rigidity of the rear-wheels 3 is set at the control value setting unit 24C. On the other hand, in a case where the motion adjustment value setting unit 24B determines that the vehicle 1 is inclined to the understeer characteristic, which exceeds a set value, the roll rigidity of the rear-wheels 3 is increased and a distribution control value for decreasing the rigidity of the front-wheels 2 is set at the control value setting unit 24C.

A value for changing the rigidity of one of the front-wheels 2 and the rear-wheels 3 may be adapted as the distribution control value, which is set as mentioned above at the control value setting unit 24C.

The distribution control value is outputted from the control value outputting unit 24D to the communication line 26, then transmitted to the suspension ECU 22 and the stabilizer ECU 23. Then, the suspension ECU 22 adjusts the damping forces of the front damping-force adjusting mechanisms 4 and the rear damping-force adjusting mechanisms 5 on the basis of a distribution adjustment value. Furthermore, the stabilizer ECU 23 adjusts the rigidities of the front-stabilizer unit FS and the rear-stabilizer unit RS.

According to the above-described control, even in the case where an oversteer tendency or an understeer tendency occurs at the vehicle 1, the vehicle 1 is controlled so that the behavior of the vehicle 1 is inclined to a neutral steer, thereby stabilizing the behavior of the vehicle 1. As a result, deterioration of a driving performance or a riding comfort may be avoided.

Additionally, in the normal rolling rigidity control (step S102), the rolling rigidity distribution ratio between the front-wheels 2 and the rear-wheels 3 is set to be equal (i.e. the distribution ratio between the front-wheels 2 and the rear-wheels 3 = 50 percent: 50 percent) in a case where the front damping-force adjusting mechanisms 4 and the rear damping-force adjusting mechanisms 5 are not actuated independently of each other.

In step S103, the information relating to the road on which the vehicle 1 is to travel is obtained. Then, in a case where it is determined that there exists a gradient exceeding a set value on the basis of the gradient information, which is included in the information relating to the road on which the vehicle 1 is to travel, the roll rigidity distribution ECU 25 determines whether or not the rigidity distribution control is executable on the basis of the gradient information (an angle) relating to the gradient, the vehicle speed and the curvature radius of the curve on the road (step S104).

In a case where the rigidity distribution control is executable (Yes in step S105), the roll rigidity distribution ECU 25 stores therein a distribution capable information (i.e. information indicating that the rigidity distribution is executable) while relating the information to the starting point of the gradient (i.e. the point at which the road gradient changes) in step S106. On the other hand, in a case where the rigidity distribution control is not executable (No in step S105), the roll rigidity distribution ECU 25 stores therein a distribution incapable information (i.e. information indicating that the rigidity distribution is not executable) while relating the information to the starting point of the gradient in step S108.

As illustrated in Fig, 3, the distribution determining unit 25A of the roll rigidity distribution ECU 25 includes a gradient changing frequency determining module 31, a straight movement determining module 32, a curve determining module 33, a continuous curves determining module 34, an abnormality and inhibition determining module 35 and a roll rigidity distribution determining module 36.

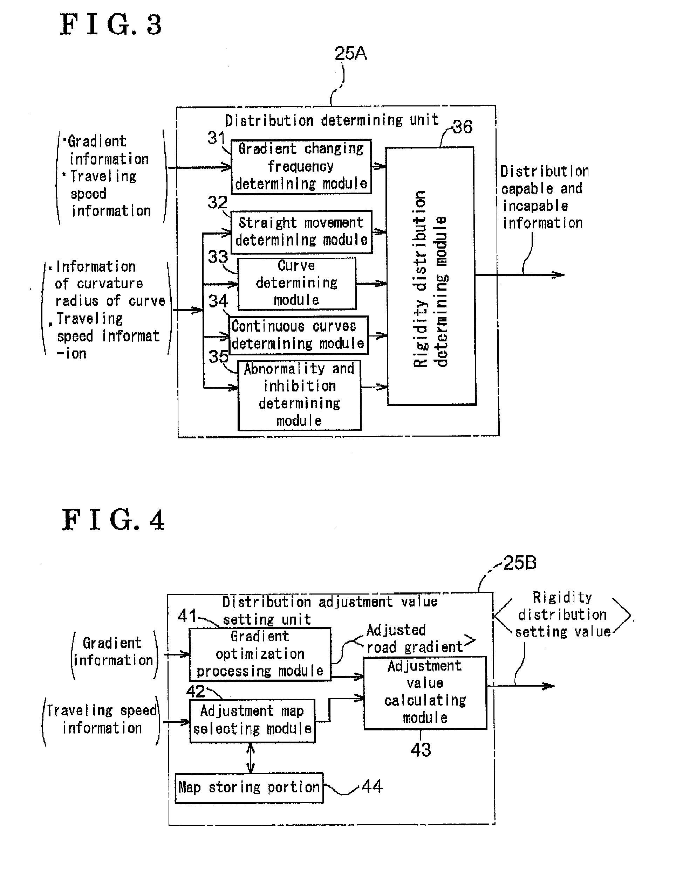

Furthermore, as illustrated in Fig. 4, the distribution adjustment value setting unit 25B of the roll rigidity distribution ECU 25 includes a gradient optimization processing unit 41, an adjustment map selecting module 42, an adjustment value calculating module 43 and a map storing portion 44.

The gradient changing frequency determining module 31 obtains the gradient information included in the road information and the traveling speed information. Each of the straight movement determining module 32, the curve determining module 33, the continuous curves determining module 34 and the abnormality and inhibition determining module 35 obtains the curvature radius information relating to the curve, which is included in the road information, and the traveling speed information.

Through the modules (31, 32, 33, 34, 35 and 36) included in the distribution determining unit 25A, it is determined whether or not the roll rigidity distribution control is executable on the basis of the obtained information. Then, in a case where a negative determination is concluded at any one of the plural modules, the roll rigidity distribution determining module 36 outputs the distribution incapable information so as to follow an OR condition.

In the case where the distribution incapable information is outputted, the distribution incapable information is written into the roll rigidity distribution ECU 25 by the traveling position determining unit 25C while relating the distribution incapable information to the information (a coordinate information) Indicating the gradient starting point in the process executed in step S108. On the other hand, in a case where the distribution capable information is outputted from the distribution determining unit 25A, the process of step S105 is executed at the distribution adjustment value setting unit 25B and the distribution capable information is written into the roll rigidity distribution ECU 25 by the traveling position determining unit 25C while relating to the information (the coordinate information) indicating the gradient starting point.

The above-mentioned processes are executed per each gradient existing on the road, on which the vehicle 1 is to travel. Furthermore, In a case where a distribution capable signal is outputted from the roll rigidity distribution determining module 36 of the distribution determining unit 25A, the distribution adjustment value is set at the distribution adjustment value setting unit 25B (the process executed at step S107).

In the distribution adjustment value setting unit 25B, the gradient optimization processing module 41 executes an optimization of the gradient information (an optimization of the gradient on the information) on the basis of the gradient information of the road, on which the vehicle 1 is to travel. Then, the gradient optimization processing module 41 transmits the optimized gradient information to the adjustment value calculating module 43. The optimization of the gradient information refers to a process of averaging the gradient of the road on the information in a case where different gradients continue within a short distance. More specifically, in this case, the gradient of the road on the information within a set distance is converted into (displaced by) a predetermined value within the set distance.

The adjustment map selecting module 42 obtains the adjustment value from an adjustment map, which is stored within the map storing portion 44, on the basis of the traveling speed information. Then, the adjustment map selecting module 42 transmits the adjustment value to the adjustment value calculating module 43.

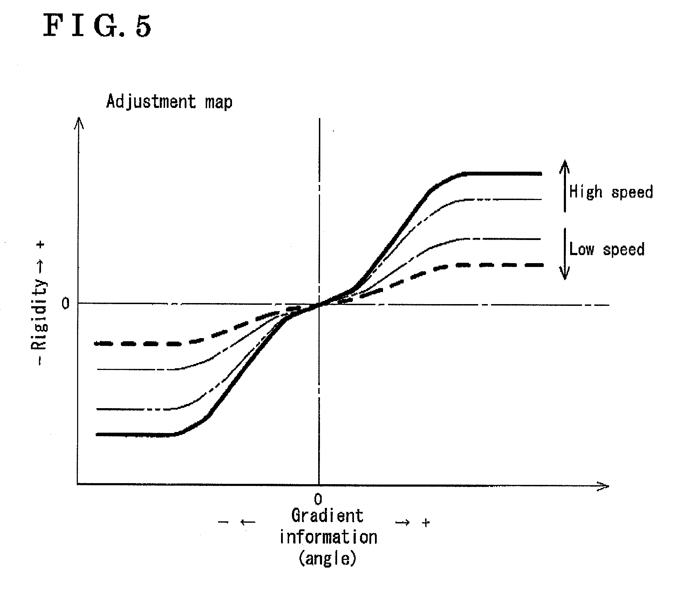

As illustrated in Fig. 5, a horizontal axis of the adjustment map indicates the gradient (the angle) and a vertical axis of the adjustment map indicates a rigidity ratio. In the adjustment map, plural adjustment curves are stored. More specifically, each of the plural adjustment curves is set so that the greater the gradient (the angle) is and the greater the vehicle speed is, the greater the rigidity becomes (i.e. the greater distribution ratio is set to be).

Accordingly, the adjustment value calculating module 43 sets a rigidity distribution setting value relative to a target whose rigidity, which is obtained from the adjustment map, is to be adjusted. The adjustment value calculating module 43 executes the process on the basis of the speed information. Therefore, the rigidity distribution setting value may be set at a timing when the vehicle 1 approaches the gradient as close as possible.

More specifically, in the case where the vehicle 1 travels on the road having the increasing gradient, the roll rigidity of the suspension unit of the front-right and front-left wheels 2 is decreased, while the roll rigidity of the suspension unit of the rear-right and rear-left wheels 3 is increased. On the other hand, in the case where the vehicle 1 travels on the road having the decreasing gradient, the roll rigidity of the suspension unit of the rear-right and rear-left wheels 3 is decreased, while the roll rigidity of the suspension unit of the front-right and front-left wheels 2 is increased.

In the case where the vehicle 1 travels on the road having the increasing gradient, the vehicle 1 may be inclined to the understeer tendency. On the other hand, in the case where the vehicle 1 travels on the road having the decreasing gradient, the vehicle 1 may be inclined to the oversteer tendency. Accordingly, in the case where the vehicle 1 travels on the road having the increasing gradient, the roll rigidity of the suspension unit of the front-right and front-left wheels 2 is decreased, thereby generating an oversteering force at the vehicle 1, On the other hand, in the case where the vehicle 1 travels on the road having the decreasing gradient, the roll rigidity of the suspension unit of the front-right and front-left wheels 2 is increased, thereby generating an understeering force at the vehicle 1.

The traveling position determining unit 25C stores therein the rigidity distribution setting value, which is set by the adjustment value calculating module 43, while relating to the information (the coordinate information) indicative of the gradient starting point.

Following the above-mentioned processes, the traveling position determining unit 25C compares the staring point of the gradient (i.e. the point at which the road gradient changes) and the current position of the vehicle 1. Then, in a case where the traveling position determining unit 25C determines that the vehicle 1 reaches the starting point of the gradient (i.e. the point at which the road gradient changes) on the basis of the comparison result, the traveling position determining unit 25C determines whether or not the control is switchable from the normal roll distribution control to the roll rigidity distribution control on the basis of the distribution capable information or the distribution incapable information, which is stored so as to be related to the starting point of the gradient (i.e. the point at which the road gradient changes).

In the case where the control incapable information is stored so as to be related to the position corresponding to the gradient, the distribution value outputting unit 25D outputs a normal distribution value (i.e. an average value), which is stored within the normal distribution value storing unit 25E, i.e., the distribution value corresponding to the gradient is not outputted, and the control is not switched to the roll rigidity distribution control (steps S109 to S111).

In step S111, it is determined that the control is not switchable even in a case where the process at the distribution determining unit 25A or the process at the distribution adjustment value setting unit 25B is not completed. Then, the distribution value outputting unit 25D outputs the normal distribution value (the average value), which is stored within the normal distribution value storing unit 25E (without outputting the distribution value corresponding to the gradient), and the process of not shifting to the roll rigidity distribution control is executed.

In a case where the control incapable information is stored so as to be related to the position corresponding to the gradient and the control is switchable, the roll rigidity distribution control is executed in step S112. In the roll rigidity distribution control, the front damping-force adjusting mechanisms 4, the rear damping-force adjusting mechanism 5, the front-stabilizer unit FS and the rear-stabilizer unit RS are controlled on the basis of the distribution adjustment value.

As described above, in the case where the vehicle 1 travels on the road having the decreasing gradient, the rigidity of the suspension unit of the front-right and front-left wheels 2 is increased on the basis of the distribution adjustment value, while the rigidity of the suspension unit of the rear-right and rear-left wheels 3 is decreased on the basis of the distribution adjustment value.

According to the roll rigidity distribution control, in a case where, for example, a control for increasing the rigidity of the front-right and front-left wheels 2 is executed, the damping force of the front damping-force adjusting mechanism 4 of the front-right wheel 2 and the damping force of the front damping-force adjusting mechanism 4 of the front-left wheels 2 are increased so as to become equal to each other. Simultaneously, the rigidity acting on the front-right and front-left wheels 2 is increased by using performances of the rigidity adjusting mechanism 9 included in the front-stabilizer unit FS.

On the other hand, in a case where the control for decreasing the rigidity of the rear-right and rear-left wheels 3 is executed, the damping force of the rear damping-force adjusting mechanism 5 of the rear-right wheel 3 and the damping force of the rear damping-force adjusting mechanism 5 of the rear-left wheel 3 are decreased so as to become equal to each other. Simultaneously, the rigidity acting on the rear-right and rear-left wheels 3 is decreased by using performances of the rigidity adjusting mechanism 9 included in the rear-stabilizing unit RS.

The roll rigidity distribution control is continuously executed as long as the gradient continues on the road. In a case where the distribution adjustment value needs to be changed, e.g. in a case where the traveling speed of the vehicle 1 changes while the control is executed, the distribution adjustment value is set again (step S113 and step S114).

The motion adjustment value setting unit 24B of the stability control ECU 24 detects the behavior of the vehicle 1 even in the case where the roll rigidity distribution control is executed. In a case where the motion adjustment value setting unit 24B detects an increase of the oversteer amount or an increase of the understeer amount, which exceeds the setting value, on the basis of the behavior of the vehicle 1, the distribution adjustment value is set again so as to restrict the oversteer tendency or the understeer tendency In step S114.

Additionally, in a case where the traveling speed of the vehicle 1 changes and the distribution of the roll rigidity becomes inappropriate while the roll rigidity distribution control is executed, the process of step S114 may be executed in order to set the distribution adjustment value may be set again.

Then, in step S115, a control of returning to a previous ratio of the roll rigidity distribution, which is determined before the control is shifted, is executed when the roll rigidity distribution control is completed.

Accordingly, in the roll rigidity control, an existence of the gradient on the road, on which the vehicle 1 is to travel, is determined on the basis of the road information, which is obtained by the navigation ECU 21, when the vehicle 1 travels on the road. In a case where the vehicle 1 travels straight on a road having little gradient, the roll rigidity distribution for equalizing the roll rigidity of the suspension unit of the front-right and front-left wheels 2 and the roll rigidity of the suspension unit of the rear-right and rear-left wheels 3 is executed (the ratio between the rigidity of the suspension unit of the front wheels 2 and the rigidity of the suspension unit of the rear-wheels 3 = 50 percent: 50 percent).

In a case where the vehicle 1 travels on a road having a curve and little gradient, the distribution control value is set on the basis of the oversteer amount or the understeer amount. Then, the rolling rigidity distribution (i.e. the ratio of the rolling rigidity distribution) is changed on the basis of the distribution control value.

Furthermore, in a case where the road, on which the vehicle 1 is to travel, includes the gradient, the roll rigidity distribution ECU 25 obtains the gradient information (the angle) from the map database 18 before the vehicle 1 reaches the gradient. Then, the roll rigidity distribution ECU 25 preliminarily calculates and sets the distribution adjustment value for determining the ration of the roll rigidity distribution for the case where the vehicle 1 travels through the gradient. The calculated distribution adjustment value is stored within the roll rigidity distribution ECU 25 while being related to the coordinate information of the gradient starting point.

Then, in a case where the vehicle 1 is determined to reach the gradient starting point on the basis of the information obtained from the navigation ECU 21, the roll rigidity distribution control is executed at the timing when the vehicle 1 reaches the gradient. More specifically, in this case, the distribution of the roll rigidity between the suspension unit of the front-right and front-left wheels 2 and the suspension unit of the rear-right and rear-left wheels 3 is adjusted on the basis of the rigidity distribution information, which is stored so as to be related to the gradient,

Accordingly, because the roll rigidity distribution is changed at the timing when the vehicle 1 reaches the gradient of the road, the control is executed without causing delay when comparing to, for example, a control that is executed after the vehicle 1 is determined to start traveling the road having the gradient on the basis of an inclination sensor. Accordingly, the roll rigidity controlling apparatus of the embodiment does not deteriorate an operability of the steering operation or the riding comfort.

Furthermore, for example, in a case where the rigidity of the suspension unit of the front-right and front-left wheels 2 is increased by executing the roll rigidity distribution control, the rigidity of the suspension unit of the rear-right and rear-left wheels 3 is decreased, so that a total rigidity of the front-wheels 2 and the rear-wheels 3 is maintained to be a constant set value. Accordingly, the roll rigidity controlling apparatus may not influence a steering operation feeling of the driver or the riding comfort.

Furthermore, in the above-described control, the roll rigidity of the front portion of the vehicle and the roll rigidity of the rear portion of the vehicle are maintained to be equal (i.e. the distribution ratio between the roll rigidity of the front portion and the roll rigidity of the rear portion = 50 percent : 50 percent) in the case where the vehicle travels straight on the relatively flat road (i.e. the road having little inclination). Accordingly, even in a case where the roll rigidity distribution control is not executed at the timing when the vehicle 1 reaches the gradient, the roll rigidity distribution is maintained to be equal. As a result, the roll rigidity controlling apparatus of the embodiment does not influence the steering operability and the riding comfort.

[Other embodiments]

The roll rigidity controlling apparatus according to the above-mentioned embodiment may be modified as follows.

(a) In a case where the roll rigidity distribution is changed, for example, only the roll rigidity of the suspension unit provided at the front portion of the vehicle may be changed. Alternatively, the roll rigidity of the suspension unit provided at the rear portion of the vehicle may be changed.

Accordingly, a number of actuators to be actuated may be reduced, which may result in enhancing energy conservation. Furthermore, the control may be simplified.

(b) The roll rigidity controlling apparatus may be modified so as to be configured to switch the control system between a control for adjusting the rigidity by controlling one of the damping force adjusting mechanism, which is configured with the shock absorber, and the stabilizer unit and a control for adjusting the rigidity by controlling both of the damping force adjusting mechanism and the stabilizer unit.

Accordingly, in the case where the roll rigidity controlling apparatus is modified so as to freely switch the two control subjects, which are configured so as to change the rigidity, an adjustment range of the rigidity may be increased.

(c) The roll rigidity controlling apparatus may be modified so as to mechanically adjust a rigidity of a suspension spring, which is configured with a coil spring, instead of the stabilizer unit. Accordingly, the suspension unit provided at the right portion of the vehicle and the suspension unit provided at the left portion of the vehicle may be finely adjusted independently of each other.

(d) The roll rigidity controlling apparatus may be modified so that the gradient information obtaining means is configured with an Image capturing device (e.g. a camera) provided at the front portion of the vehicle and a processing system for calculating the gradient of the road on the basis of an image captured by the image capturing device.

Accordingly, the roll rigidity distribution ECU 25 adjusts the roll rigidity of the front portion of the vehicle and the roll rigidity of the rear portion of the vehicle at the timing when the vehicle 1 reaches the gradient of the road or before the vehicle 1 reaches the gradient of the road. As a result, the roll rigidity suitable for the gradient may be achievable. When comparing to the known roll rigidity controlling apparatus that executes a control after changes in a posture of a vehicle is detected by means of a sensor and the like, the roll rigidity controlling apparatus according to the embodiment preliminarily avoids the understeer tendency or the oversteer tendency, which is likely to occur at the vehicle 1, without causing the delay in executing the control, because the roll rigidity distribution between the front portion and the rear portion of the vehicle is changed when the vehicle 1 reaches the starting point of the gradient, at which the posture of the vehicle is likely to be changed, while the vehicle 1 travels. Accordingly, the roll rigidity controlling apparatus according to the embodiment changes the distribution of the roll rigidity between the front portion and the rear portion of the vehicle at an appropriate timing, thereby appropriately avoiding disruption of the posture of the vehicle in the yawing direction.

According to the embodiment, the roll rigidity controlling apparatus includes the front roll-rigidity adjusting means (4, FS) for adjusting the roll rigidity of the front wheels 2 and the rear-roll rigidity adjusting means (5, RS) for adjusting the roll rigidity of the rear wheels 3. The roll rigidity distribution ECU 25 changes at least one of the roll rigidity of the front roll-rigidity changing means (4, FS) and the roll rigidity of the rear-roll rigidity changing means (5, RS).

Accordingly, the roll rigidity of the front portion of the vehicle and the roll rigidity of the rear portion of the vehicle may be appropriately set so as to correspond to the gradient.

According to the embodiment, each of the front roll-rigidity adjusting means (FS) and the rear-roll rigidity adjusting means (RS) includes the stabilizer unit (FS, RS) having the torsion bar 8, which adjusts the torsional rigidity by means of the rigidity adjusting mechanism, and two arms 7, which are integrally provided at both end portions of the torsion bar 8, respectively. Furthermore, the stabilizer unit (FS, RS) is supported by the vehicle 1 so that the torsion bar 8 extends in the lateral direction of the vehicle 1. Two arms 7 support the right wheel and the left wheel, respectively.

Accordingly, the rigidity adjusting mechanism 9 of each of the stabilizer units FS, RS adjusts the torsional rigidity, thereby achieving the adjustment of the rigidities of the front portion and the rear portion of the vehicle.

According to the embodiment, the roll rigidity controlling apparatus includes the vehicle speed sensor 14 for obtaining the traveling speed information of the vehicle 1. The roll rigidity distribution ECU 25 corrects the adjustment amount of the rigidity on the basis of the traveling speed information, which is obtained by the vehicle speed sensor 14.

Accordingly, for example, the roll rigidity controlling apparatus of the embodiment adjusts the roll rigidity in the manner where, the greater the vehicle speed is, the greater value the roll rigidity is set to be. As a result, the disruption of the posture of the vehicle may be further appropriately avoided.

According to the embodiment, the navigation ECU 21 includes the GPS-type navigation unit for obtaining the positional information on the basis of received signals, which are outputted from plural satellites. Furthermore, the suspension ECU 22 obtains the gradient information of the road set on the map information on the basis of the positional information.

Accordingly, the control may be executed on the basis of the information obtained from the navigation unit using a global positioning system (GPS), which is provided at the vehicle. A roll rigidity controlling apparatus includes a positional information obtaining means (21) for obtaining a positional information of a vehicle (1), a gradient information obtaining means (22) for obtaining a gradient information relating to a gradient of a road existing ahead of the vehicle (1), and a roll rigidity distribution changing means (25) for changing a roll rigidity distribution ratio between a front portion and a rear portion of the vehicle (1) on the basis of the positional information obtained by the positional information obtaining means (21) and the gradient information obtained by the gradient information obtaining means (22) before the vehicle (1) reaches a point at which the gradient of the road changes.

## Claims

1. A roll rigidity controlling apparatus comprising:
a positional information obtaining means (21) for obtaining a positional information of a vehicle (1);
a gradient information obtaining means (22) for obtaining a gradient information relating to a gradient of a road existing ahead of the vehicle (1); and
a roll rigidity distribution changing means (25) for changing a roll rigidity distribution ratio between a front portion and a rear portion of the vehicle (1) on the basis of the positional information obtained by the positional information obtaining means (21) and the gradient information obtained by the gradient information obtaining means (22) before the vehicle (1) reaches a point at which the gradient of the road changes.

2. The roll rigidity controlling apparatus according to Claim 1 further comprising a front roll-rlgidity adjusting means (4, FS) for adjusting a roll rigidity of a front wheel (2) and a rear-roll rigidity adjusting means (5, RS) for adjusting a roll rigidity of a rear wheel (3), wherein the roll rigidity distribution changing means (25) changes at least one of the roll rigidity of the front roll-rigidity changing means (4, FS) and the roll rigidity of the rear-roll rigidity changing means (5, RS).

3. The roll rigidity controlling apparatus according to Claim 2, wherein each of the front roll-rigidity adjusting means (FS) and the rear-roll rigidity adjusting means (RS) includes a stabilizer unit (FS, RS) having a torsion bar (8), which adjusts a torsional rigidity by means of a rigidity adjusting mechanism, and two arms (7), which are integrally provided at both end portions of the torsion bar (8), respectively, the stabilizer unit (FS, RS) is supported by the vehicle (1) so that the torsion bar (8) extends in a lateral direction of the vehicle (1), and wherein the two arms (7) support a right wheel and a left wheel, respectively.

4. The roll rigidity controlling apparatus according to any one of Claims 1 to 3 further comprising a traveling speed obtaining means (14) for obtaining a traveling speed information of the vehicle (1), wherein the roll rigidity distribution changing means (25) corrects an adjustment amount of the rigidity on the basis of the traveling speed information, which is obtained by the traveling speed obtaining means (14).

5. The roll rigidity controlling apparatus according to any one of Claims 1 to 4, wherein the positional information obtaining means (21) includes a GPS-type navigation unit (21) for obtaining the positional information on the basis of received signals, which are outputted from plural satellites, and the gradient information obtaining means (22) obtains the gradient information of a road set on a map information on the basis of the positional information.
